# EUROPEAN PATENT APPLICATION

(11) **EP 4 206 247 A1**
(43) Date of publication of application: **05.07.2023**
(21) Application number: 21861736.3
(22) Date of filing: 27.08.2021
(51) Int. Cl.: C08F 287/00, C08K 5/13, C08L 51/00, H01M 4/13, H01M 4/139, H01M 4/62

(54) **BINDER COMPOSITION FOR NONAQUEOUS SECONDARY BATTERY ELECTRODES, METHOD FOR PRODUCING SAME, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(30) Priority: 31.08.2020 JP 2020146399
(71) Applicant: Zeon Corporation, Tokyo 100-8246 (JP)
(72) Inventor: MATSUMURA Taku, Tokyo 100-8246 (JP); TANAKA Keiichiro, Tokyo 100-8246 (JP); OSHIMA Hiroki, Tokyo 100-8246 (JP)
(74) Representative: Maiwald GmbH
(86) International application number: PCT/JP2021/031620
(87) International publication number: WO 2022/045315

(57) **Abstract**

Provided is a binder composition for a non-aqueous secondary battery electrode that can form an electrode for a non-aqueous secondary battery having excellent moisture resistance. The binder composition for a non-aqueous secondary battery electrode contains phenolic compound particles and a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit.

## Description

### TECHNICAL FIELD

The present disclosure relates to a binder composition for a non-aqueous secondary battery electrode and method of producing the same, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

Particulate polymers formed of polymers that include block regions formed of aromatic vinyl monomer units are conventionally used as binders contained in binder compositions.

For example, Patent Literature (PTL) 1 discloses a binder composition containing a particulate polymer formed of a graft polymer obtained by providing a hydrophilic graft chain with respect to core particles that contain a block copolymer including an aromatic vinyl block region and an isoprene block region formed of isoprene units. According to PTL 1, a hindered phenol antioxidant is contained in a core particle portion of the aforementioned particulate polymer.

### CITATION LIST

### Patent Literature

PTL 1: WO2019/172281A1

### SUMMARY

### (Technical Problem)

An electrode that includes an electrode mixed material layer may be exposed to a high-humidity environment during transportation or storage. Consequently, it is desirable for an electrode including an electrode mixed material layer to maintain peel strength well even after storage in a high-humidity environment (i.e., have excellent moisture resistance).

However, there is room for improvement of the moisture resistance of an electrode that includes an electrode mixed material layer formed using the conventional binder composition described above.

Accordingly, one object of the present disclosure is to provide a binder composition for a non-aqueous secondary battery electrode that can form an electrode for a non-aqueous secondary battery having excellent moisture resistance.

Another object of the present disclosure is to provide a slurry composition for a non-aqueous secondary battery electrode that can form an electrode for a non-aqueous secondary battery having excellent moisture resistance.

Yet another object of the present disclosure is to provide an electrode for a non-aqueous secondary battery that has excellent moisture resistance and a non-aqueous secondary battery that includes this electrode for a non-aqueous secondary battery.

### (Solution to Problem)

The inventors conducted diligent investigation with the aim of solving the problem set forth above. The inventors discovered that an electrode for a non-aqueous secondary battery having excellent moisture resistance can be obtained by using a binder composition that contains a particulate polymer formed of a specific graft polymer and phenolic compound particles, and, in this manner, completed the present disclosure.

Specifically, the present disclosure aims to advantageously solve the problem set forth above, and a presently disclosed binder composition for a non-aqueous secondary battery electrode comprises: a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit; and phenolic compound particles. By using a binder composition that contains a particulate polymer formed of a specific graft polymer and phenolic compound particles in this manner, it is possible to obtain an electrode for a non-aqueous secondary battery having excellent moisture resistance.

Note that a "monomer unit" of a polymer referred to in the present disclosure is a "repeating unit derived from the monomer that is included in a polymer obtained using the monomer".

In the presently disclosed binder composition for a non-aqueous secondary battery electrode, the particulate polymer and the phenolic compound particles are preferably present independently of each other. When the particulate polymer and the phenolic compound particles are present independently of each other in the binder composition, the moisture resistance of an electrode formed using the binder composition can be further increased.

In the presently disclosed binder composition for a non-aqueous secondary battery electrode, the phenolic compound particles preferably have a volume-average particle diameter of not less than 0.05 µm and not more than 3 µm. When the volume-average particle diameter of the phenolic compound particles is within the specific range set forth above, the viscosity stability of a slurry composition produced using the binder composition can be increased, and the peel strength of an electrode can be improved. Moreover, when the volume-average particle diameter of the phenolic compound particles is within the specific range set forth above, the moisture resistance of an electrode formed using the binder composition can be further increased.

Note that the volume-average particle diameter of phenolic compound particles referred to in the present disclosure can be measured by a method described in the EXAMPLES section of the present specification.

In the presently disclosed binder composition for a non-aqueous secondary battery electrode, content of the phenolic compound particles is preferably not less than 0.1 parts by mass and not more than 2.5 parts by mass relative to 100 parts by mass of the particulate polymer. When the content of the phenolic compound particles in the binder composition is within the specific range set forth above, sufficiently high viscosity stability of a slurry composition produced using the binder composition can be ensured while also further increasing the moisture resistance of an electrode formed using the binder composition.

In the presently disclosed binder composition for a non-aqueous secondary battery electrode, the acidic group-containing monomer preferably includes a carboxyl group-containing monomer. When the acidic group-containing monomer includes a carboxyl group-containing monomer, the moisture resistance of an electrode formed using the binder composition can be further increased.

The presently disclosed binder composition for a non-aqueous secondary battery electrode preferably further comprises either or both of a volatile alkali compound and a cation originating from the volatile alkali compound. When the binder composition further contains either or both of a volatile alkali compound and a cation originating from the volatile alkali compound, the moisture resistance of an electrode formed using the binder composition can be further increased.

In the presently disclosed binder composition for a non-aqueous secondary battery electrode, the phenolic compound particles preferably contain a polymer-type phenolic compound. When the phenolic compound particles contain a polymer-type phenolic compound, the moisture resistance of an electrode formed using the binder composition can be further increased.

Moreover, the present disclosure aims to advantageously solve the problem set forth above, and a presently disclosed method of producing a binder composition for a non-aqueous secondary battery electrode comprises a step of mixing phenolic compound particles and a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit. Through the presently disclosed method of producing a binder composition for a non-aqueous secondary battery electrode, it is possible to produce a binder composition for a non-aqueous secondary battery electrode that can form an electrode for a non-aqueous secondary battery having excellent moisture resistance.

Furthermore, the present disclosure aims to advantageously solve the problem set forth above, and a presently disclosed slurry composition for a non-aqueous secondary battery electrode comprises: an electrode active material; and any one of the binder compositions for a non-aqueous secondary battery electrode set forth above. A slurry composition for a non-aqueous secondary battery electrode that contains an electrode active material and any one of the binder compositions for a non-aqueous secondary battery electrode set forth above in this manner can form an electrode having excellent moisture resistance.

Also, the present disclosure aims to advantageously solve the problem set forth above, and a presently disclosed electrode for a non-aqueous secondary battery comprises an electrode mixed material layer formed using the slurry composition for a non-aqueous secondary battery electrode set forth above. An electrode for a non-aqueous secondary battery that includes an electrode mixed material layer formed using the slurry composition for a non-aqueous secondary battery electrode set forth above in this manner has excellent moisture resistance.

Moreover, the present disclosure aims to advantageously solve the problem set forth above, and a presently disclosed non-aqueous secondary battery comprises the electrode for a non-aqueous secondary battery set forth above. By using the electrode for a non-aqueous secondary battery set forth above, it is possible to obtain a non-aqueous secondary battery that can display excellent performance.

### (Advantageous Effect)

According to the present disclosure, it is possible to provide a binder composition for a non-aqueous secondary battery electrode that can form an electrode for a non-aqueous secondary battery having excellent moisture resistance.

Moreover, according to the present disclosure, it is possible to provide a slurry composition for a non-aqueous secondary battery electrode that can form an electrode for a non-aqueous secondary battery having excellent moisture resistance.

Furthermore, according to the present disclosure, it is possible to provide an electrode for a non-aqueous secondary battery that has excellent moisture resistance and a non-aqueous secondary battery that includes this electrode for a non-aqueous secondary battery.

### DETAILED DESCRIPTION

The following provides a detailed description of embodiments of the present disclosure.

The presently disclosed binder composition for a non-aqueous secondary battery electrode can be used in production of the presently disclosed slurry composition for a non-aqueous secondary battery electrode. Moreover, a slurry composition that is produced using the presently disclosed binder composition can be used in production of an electrode of a non-aqueous secondary battery such as a lithium ion secondary battery. Furthermore, a feature of the presently disclosed non-aqueous secondary battery is that the presently disclosed electrode for a non-aqueous secondary battery, which is formed using the presently disclosed slurry composition, is used therein.

Note that the presently disclosed binder composition for a non-aqueous secondary battery electrode, slurry composition for a non-aqueous secondary battery electrode, and electrode for a non-aqueous secondary battery are preferably for a negative electrode and that the presently disclosed non-aqueous secondary battery is preferably a non-aqueous secondary battery in which the presently disclosed electrode for a non-aqueous secondary battery is used as a negative electrode.

### (Binder composition for non-aqueous secondary battery electrode)

The presently disclosed binder composition for a non-aqueous secondary battery electrode (hereinafter, also referred to simply as a "binder composition") contains a particulate polymer and phenolic compound particles, and optionally further contains other components that can be compounded in binder compositions. In addition, the presently disclosed binder composition for a non-aqueous secondary battery electrode normally further contains a dispersion medium such as water.

Through the presently disclosed binder composition, it is possible to form an electrode for a non-aqueous secondary battery having excellent moisture resistance.

It is preferable that the particulate polymer and the phenolic compound particles are present independently of each other in the presently disclosed binder composition. When the particulate polymer and the phenolic compound particles are present independently of each other, the moisture resistance of an electrode that includes an electrode mixed material layer formed using the binder composition can be further improved.

The phrase "the particulate polymer and the phenolic compound particles are present independently of each other" means that particles of one among the particulate polymer and the phenolic compound particles are not incorporated into an inner part of particles of the other among the particulate polymer and the phenolic compound particles. In other words, the particulate polymer is preferably not in a state in which it is incorporated into an inner part of the phenolic compound particles, and the phenolic compound particles are preferably not in a state in which they are incorporated into an inner part of the particulate polymer.

### <Particulate polymer>

The particulate polymer is a component that functions as a binder and that, in a case in which a slurry composition containing the binder composition is used to form an electrode mixed material layer, for example, can hold components such as an electrode active material so that they do not detach from the electrode mixed material layer.

The particulate polymer is water-insoluble particles that are formed of a specific graft polymer. Note that when particles of a polymer are referred to as "water-insoluble" in the present disclosure, this means that when 0.5 g of the polymer is dissolved in 100 g of water at a temperature of 25°C, insoluble content is 90 mass% or more.

### <<Graft polymer>>

The graft polymer forming the particulate polymer is obtained by causing a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit so as to provide an acidic graft chain.

### {Core particles}

The block copolymer forming the core particles includes an aromatic vinyl block region formed of an aromatic vinyl monomer unit and an aliphatic conjugated diene block region formed of an aliphatic conjugated diene monomer unit, and may optionally further include a macromolecule chain section where repeating units other than aromatic vinyl monomer units and aliphatic conjugated diene monomer units are linked (hereinafter, also referred to simply as the "other region"). The core particles may also contain either or both of a hindered phenol antioxidant and a phosphite antioxidant, which are described in detail further below.

Note that the block copolymer may include just one aromatic vinyl block region or may include a plurality of aromatic vinyl block regions. Likewise, the block copolymer may include just one aliphatic conjugated diene block region or may include a plurality of aliphatic conjugated diene block regions. Moreover, the block copolymer may include just one other region or may include a plurality of other regions. It is preferable that the block copolymer only includes an aromatic vinyl block region and an aliphatic conjugated diene block region.

### -Aromatic vinyl block region-

The aromatic vinyl block region is a region that only includes aromatic vinyl monomer units as repeating units as previously described.

A single aromatic vinyl block region may be composed of just one type of aromatic vinyl monomer unit or may be composed of a plurality of types of aromatic vinyl monomer units, but is preferably composed of just one type of aromatic vinyl monomer unit.

Moreover, a single aromatic vinyl block region may include a coupling moiety (i.e., aromatic vinyl monomer units composing a single aromatic vinyl block region may be linked via a coupling moiety).

In a case in which the polymer includes a plurality of aromatic vinyl block regions, the types and proportions of aromatic vinyl monomer units composing these aromatic vinyl block regions may be the same or different for each of the aromatic vinyl block regions, but are preferably the same.

Examples of aromatic vinyl monomers that can form a constituent aromatic vinyl monomer unit of the aromatic vinyl block region include aromatic monovinyl compounds such as styrene, styrene sulfonic acid and salts thereof, α-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers may be used individually or two or more of these aromatic vinyl monomers may be used in combination, it is preferable that one of these aromatic vinyl monomers is used individually.

The proportion constituted by aromatic vinyl monomer units in the block copolymer when the amount of all repeating units (monomer units and structural units) in the block copolymer is taken to be 100 mass% is preferably 1 mass% or more, more preferably 10 mass% or more, even more preferably 20 mass% or more, and further preferably 30 mass% or more, and is preferably 60 mass% or less, more preferably 50 mass% or less, even more preferably 45 mass% or less, and further preferably 40 mass% or less. When the proportion constituted by aromatic vinyl monomer units in the block copolymer is not less than any of the lower limits set forth above, the viscosity stability of a slurry composition produced using the binder composition can be increased, and the peel strength of an electrode can be improved. On the other hand, when the proportion constituted by aromatic vinyl monomer units in the block copolymer is not more than any of the upper limits set forth above, the stability of the binder composition can be increased.

Note that the proportion constituted by aromatic vinyl monomer units in the block copolymer is normally the same as the proportion constituted by the aromatic vinyl block region in the block copolymer.

### -Aliphatic conjugated diene block region-

The aliphatic conjugated diene block region is a region that includes an aliphatic conjugated diene monomer unit as a repeating unit.

Examples of aliphatic conjugated diene monomers that can form a constituent aliphatic conjugated diene monomer unit of the aliphatic conjugated diene block region include conjugated diene compounds having a carbon number of 4 or more such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination. Of these aliphatic conjugated diene monomers, 1,3-butadiene and isoprene are preferable from a viewpoint of improving the peel strength of an electrode, and 1,3-butadiene is more preferable.

The aliphatic conjugated diene block region may include a coupling moiety (i.e., aliphatic conjugated diene monomer units composing a single aliphatic conjugated diene block region may be linked via a coupling moiety).

Moreover, the aliphatic conjugated diene block region may have a cross-linked structure (i.e., the aliphatic conjugated diene block region may include a structural unit obtained through cross-linking of an aliphatic conjugated diene monomer unit).

Furthermore, an aliphatic conjugated diene monomer unit included in the aliphatic conjugated diene block region may have been hydrogenated (i.e., the aliphatic conjugated diene block region may include a structural unit (hydrogenated aliphatic conjugated diene unit) that is obtained through hydrogenation of an aliphatic conjugated diene monomer unit).

A structural unit obtained through cross-linking of an aliphatic conjugated diene monomer unit can be introduced into the block copolymer through cross-linking of a polymer that includes an aromatic vinyl block region and an aliphatic conjugated diene block region.

The cross-linking can be performed using a radical initiator such as a redox initiator that is a combination of an oxidant and a reductant, for example, but is not specifically limited to being performed in this manner. Examples of oxidants that can be used include organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide. Examples of reductants that can be used include compounds that include a metal ion in a reduced state such as ferrous sulfate and copper(I) naphthenate; sulfonic acid compounds such as sodium methanesulfonate; and amine compounds such as dimethylaniline. One of these organic peroxides or reductants may be used individually, or two or more of these organic peroxides or reductants may be used in combination.

Note that the cross-linking may be performed in the presence of a crosslinker such as a polyvinyl compound (divinylbenzene, etc.), a polyallyl compound (diallyl phthalate, triallyl trimellitate, diethylene glycol bis(allyl carbonate), etc.), or any of various glycols (ethylene glycol diacrylate, etc.). Moreover, the cross-linking can be performed through irradiation with active energy rays such as γ-rays.

No specific limitations are placed on the method by which a hydrogenated aliphatic conjugated diene unit is introduced into the block copolymer. For example, a method in which a polymer including an aromatic vinyl block region and an aliphatic conjugated diene block region is hydrogenated so as to convert an aliphatic conjugated diene monomer unit to a hydrogenated aliphatic conjugated diene unit and thereby obtain the block copolymer is preferable due to ease of production of the block copolymer.

The total amount of aliphatic conjugated diene monomer units, structural units obtained through cross-linking of aliphatic conjugated diene monomer units, and hydrogenated aliphatic conjugated diene units in the block copolymer when the amount of all repeating units (monomer units and structural units) in the block copolymer is taken to be 100 mass% is preferably 40 mass% or more, more preferably 50 mass% or more, even more preferably 55 mass% or more, and further preferably 60 mass% or more, and is preferably 99 mass% or less, more preferably 90 mass% or less, even more preferably 80 mass% or less, and further preferably 70 mass% or less. When the total proportion constituted by aliphatic conjugated diene monomer units, structural units obtained through cross-linking of aliphatic conjugated diene monomer units, and hydrogenated aliphatic conjugated diene units in the block copolymer is not less than any of the lower limits set forth above, the stability of the binder composition can be increased. On the other hand, when the total proportion constituted by aliphatic conjugated diene monomer units, structural units obtained through cross-linking of aliphatic conjugated diene monomer units, and hydrogenated aliphatic conjugated diene units in the block copolymer is not more than any of the upper limits set forth above, the peel strength of an electrode can be increased.

Note that the proportion constituted by aliphatic conjugated diene monomer units, structural units obtained through cross-linking of aliphatic conjugated diene monomer units, and hydrogenated aliphatic conjugated diene units in the block copolymer is normally the same as the proportion constituted by the aliphatic conjugated diene block region in the block copolymer.

### -Other region-

The other region is a region that only includes repeating units other than aromatic vinyl monomer units and aliphatic conjugated diene monomer units (hereinafter, also referred to simply as "other repeating units") as repeating units as previously described.

Note that a single other region may be composed of one type of other repeating unit or may be composed of a plurality of types of other repeating units.

Moreover, a single other region may include a coupling moiety (i.e., other repeating units composing a single other region may be linked via a coupling moiety).

Furthermore, in a case in which the polymer includes a plurality of other regions, the types and proportions of other repeating units composing these other regions may be the same or different for each of the other regions.

Examples of the other repeating units include, but are not specifically limited to, nitrile group-containing monomer units such as an acrylonitrile unit and a methacrylonitrile unit; (meth)acrylic acid ester monomer units such as an acrylic acid alkyl ester unit and a methacrylic acid alkyl ester unit; and acidic group-containing monomer units such as a carboxyl group-containing monomer unit, a sulfo group-containing monomer unit, and a phosphate group-containing monomer unit. In the present disclosure, "(meth)acrylic acid" is used to indicate "acrylic acid" and/or "methacrylic acid".

### -Production method of core particles-

Core particles containing the block copolymer described above can be produced, for example, through a step (block copolymer solution production step) of block polymerizing monomers such as an aromatic vinyl monomer and an aliphatic conjugated diene monomer described above in an organic solvent to obtain a solution of a block copolymer that includes an aromatic vinyl block region and an aliphatic conjugated diene block region and a step (emulsification step) of adding water to the obtained solution of the block copolymer and performing emulsification to form particles of the block copolymer.

### =Block copolymer solution production step=

No specific limitations are placed on the method of block polymerization in the block copolymer solution production step. For example, a block copolymer can be produced by adding a second monomer component to a solution obtained through polymerization of a first monomer component differing from the second monomer component, polymerizing the second monomer component, and further repeating addition and polymerization of monomer components as necessary. The organic solvent that is used as a reaction solvent is not specifically limited and can be selected as appropriate depending on the types of monomers and so forth.

A block copolymer obtained through block polymerization in this manner is preferably subjected to a coupling reaction using a coupling agent in advance of the subsequently described emulsification step. Through this coupling reaction, it is possible to cause bonding between the ends of diblock structures contained in the block copolymer via the coupling agent and to thereby convert these diblock structures to a triblock structure (i.e., reduce the diblock content), for example.

Examples of coupling agents that can be used in the coupling reaction include, but are not specifically limited to, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of the examples given above, dichlorodimethylsilane is preferable as the coupling agent. The coupling reaction using the coupling agent results in a coupling moiety that is derived from the coupling agent being introduced into a constituent macromolecule chain (for example, a triblock structure) of the block copolymer.

Although the solution of the block copolymer obtained after the block polymerization and optional coupling reaction described above may be subjected to the subsequently described emulsification step in that form, the solution of the block copolymer can be subjected to the emulsification step after addition of either or both of a hindered phenol antioxidant and a phosphite antioxidant, and preferably both a hindered phenol antioxidant and a phosphite antioxidant, as necessary.

Examples of hindered phenol antioxidants that may be used include, but are not specifically limited to, 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], and 2,4,6-tris(3',5'-di-tert-butyl-4'-hydroxybenzyl)mesitylene. Of these hindered phenol antioxidants, 4-[[4,6-bis(octylthio)-1,3,5-triazin-2-yl]amino]-2,6-di-tert-butylphenol and 2,6-di-tert-butyl-p-cresol are preferable from a viewpoint of inhibiting electrode swelling accompanying repeated charging and discharging, and 4-[[4,6-bis(octylthio)-1,3,5-triazin-2-yl]amino]-2,6-di-tert-butylphenol is more preferable from a viewpoint of inhibiting electrode swelling accompanying repeated charging and discharging while also improving the peel strength of an electrode.

One of these hindered phenol antioxidants may be used individually, or two or more of these hindered phenol antioxidants may be used in combination.

Note that although the amount of hindered phenol antioxidant that is used can be adjusted as appropriate within a range that yields the desired effects, the proportional content of the hindered phenol antioxidant in the produced particulate polymer is normally 1 mass% or less.

Examples of phosphite antioxidants that may be used include, but are not specifically limited to, 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-di-t-butylphenyl) 2-ethylhexyl phosphite, and tris(2,4-di-tert-butylphenyl) phosphite. Of these phosphite antioxidants, 3,9-bis(octadecyloxy)-2,4,8,10-tetraoxa-3,9-diphosphaspiro[5.5]undecane and tris(2,4-di-tert-butylphenyl) phosphite are preferable from a viewpoint of inhibiting electrode swelling accompanying repeated charging and discharging, and 3,9-bis(octadecyloxy)-2,4,8,10-tetraoxa-3,9-diphosphaspiro[5.5]undecane is more preferable from a viewpoint of inhibiting electrode swelling accompanying repeated charging and discharging while also improving the peel strength of an electrode.

One of these phosphite antioxidants may be used individually, or two or more of these phosphite antioxidants may be used in combination.

The amount of phosphite antioxidant that is used can be adjusted as appropriate within a range that yields the desired effects.

### =Emulsification step=

Although no specific limitations are placed on the method of emulsification in the emulsification step, a method in which phase-inversion emulsification is performed with respect to a preliminary mixture of the block copolymer solution obtained in the block copolymer solution production step described above and an aqueous solution of an emulsifier is preferable, for example. The block copolymer solution may contain either or both, and preferably both of a hindered phenol antioxidant and a phosphite antioxidant as previously described. The phase-inversion emulsification can be carried out using a known emulsifier and emulsifying/dispersing device, for example. Specific examples of emulsifying/dispersing devices that can be used include, but are not specifically limited to, batch emulsifying/dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying/dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying/dispersing devices such as a Microfluidizer (product name; produced by Mizuho Industrial Co., Ltd.), a Nanomizer (product name; produced by Nanomizer Inc.), an APV Gaulin (product name; produced by Gaulin), and a LAB 1000 (produced by SPX FLOW, Inc.); membrane emulsifying/dispersing devices such as a Membrane Emulsifier (product name; produced by Reica Co., Ltd.); vibratory emulsifying/dispersing devices such as a Vibro Mixer (product name; produced by Reica Co., Ltd.); and ultrasonic emulsifying/dispersing devices such as an Ultrasonic Homogenizer (product name; produced by Branson). Conditions of the emulsification operation performed by the emulsifying/dispersing device (for example, processing temperature and processing time) may be set as appropriate so as to achieve a desired dispersion state without any specific limitations.

A known method may be used to remove organic solvent from the emulsion obtained after phase-inversion emulsification as necessary, for example, so as to yield a water dispersion of core particles containing the block copolymer.

### {Acidic graft chain}

The acidic graft chain can, without any specific limitations, be introduced into the block copolymer forming the core particles by graft polymerizing an acidic group-containing monomer or macromonomer with the block copolymer.

Examples of acidic group-containing monomers that may be used include, but are not specifically limited to, carboxyl group-containing monomers, sulfo group-containing monomers, and phosphate group-containing monomers.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

An acid anhydride that produces a carboxyl group through hydrolysis can also be used as a carboxyl group-containing monomer.

Moreover, an ethylenically unsaturated polybasic carboxylic acid such as butene tricarboxylic acid or a partial ester of an ethylenically unsaturated polybasic carboxylic acid such as monobutyl fumarate or mono-2-hydroxypropyl maleate can be used as a carboxyl group-containing monomer.

Examples of sulfo group-containing monomers include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryl oyl oxyethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

One of the acidic group-containing monomers described above may be used individually, or two or more of the acidic group-containing monomers described above may be used in combination. From a viewpoint of improving the viscosity stability of a slurry composition produced using the binder composition and the peel strength of a formed electrode, the acidic group-containing monomer is preferably a carboxyl group-containing monomer, more preferably methacrylic acid, itaconic acid, or acrylic acid, even more preferably methacrylic acid or acrylic acid, and particularly preferably methacrylic acid.

The macromonomer is not specifically limited so long as it is a macromonomer that includes an acidic group, but is preferably a macromonomer of a polycarboxylic acid polymer, for example.

### -Production method of graft polymer-

Graft polymerization of the acidic graft chain can be performed by a known graft polymerization method without any specific limitations. More specifically, introduction of the acidic graft chain through graft polymerization can be performed, for example, using a radical initiator such as a redox initiator that is a combination of an oxidant and reductant. The oxidant and the reductant can be the same as any of those previously described as oxidants and reductants that can be used in cross-linking of a block polymer that includes a block region formed of an aromatic vinyl monomer unit and an aliphatic conjugated diene block region.

In a case in which a redox initiator is used to perform graft polymerization with respect to a block copolymer that includes an aromatic vinyl block region and an aliphatic conjugated diene block region, cross-linking of aliphatic conjugated diene monomer units in the block copolymer may be performed during introduction of the acidic graft chain by graft polymerization. It should be noted that it is not essential to cause cross-linking to proceed simultaneously to graft polymerization in production of the graft polymer, and the type of radical initiator and the reaction conditions may be adjusted such that only graft polymerization proceeds.

The graft polymerization reaction can be carried out by, for example, adding the acidic group-containing monomer and/or macromonomer to a water dispersion of the core particles containing the block copolymer and performing heating thereof in the presence of the radical initiator described above.

The total amount of the acidic group-containing monomer and macromonomer that is added in the graft polymerization reaction is preferably 1 part by mass or more, more preferably 2 parts by mass or more, even more preferably 3.5 parts by mass or more, further preferably 4 parts by mass or more, and even further preferably 6 parts by mass or more per 100 parts by mass of the block copolymer, and is preferably 20 parts by mass or less, more preferably 10 parts by mass or less, and even more preferably 8 parts by mass or less per 100 parts by mass of the block copolymer. When the total amount of the acidic group-containing monomer and macromonomer that is added in the graft polymerization reaction is not less than any of the lower limits set forth above, the viscosity stability of a slurry composition produced using the binder composition can be increased, and the peel strength of an electrode can be improved. On the other hand, when the total amount of the acidic group-containing monomer and macromonomer that is added in the graft polymerization reaction is not more than any of the upper limits set forth above, an excessive increase of the viscosity of the binder composition can be inhibited, and the moisture resistance of an electrode can be further increased. Moreover, when the total amount of the acidic group-containing monomer and macromonomer that is added in the graft polymerization reaction is not more than any of the upper limits set forth above, the internal resistance of a secondary battery can be reduced.

Note that it is not essential for all of the acidic group-containing monomer and macromonomer that is added in the graft polymerization reaction to undergo graft polymerization with the block copolymer forming the core particles, and it is also possible for a portion of the acidic group-containing monomer and/or macromonomer that does not undergo graft polymerization with the block copolymer to undergo polymerization among itself and thereby form a water-soluble polymer as a by-product.

A water-soluble chain transfer agent is also preferably used in the graft polymerization reaction. By carrying out the graft polymerization reaction of the acidic group-containing monomer and/or macromonomer with the core particles containing the block polymer in the presence of a water-soluble chain transfer agent, it is possible to inhibit, to a suitable degree, acidic group-containing monomer and/or macromonomer that is not graft polymerized with the block copolymer from undergoing a polymerization reaction among itself, and thus it is possible to inhibit an excessive increase of the weight-average molecular weight of the water-soluble polymer that is formed as a by-product. Consequently, the moisture resistance of an electrode formed using the binder composition can be further increased.

Note that when a chain transfer agent is referred to as "water-soluble" in the present disclosure, this means that when 0.5 g of the chain transfer agent is dissolved in 100 g of water at a temperature of 25°C, insoluble content is less than 1 mass%.

Examples of water-soluble chain transfer agents that may be used include hypophosphites, phosphorous acids, mercaptans (thiols), secondary alcohols, and amines. Of these examples, mercaptans such as mercaptoacetic acid (thioglycolic acid), 2-mercaptosuccinic acid, 3-mercaptopropionic acid, and 3-mercapto-1,2-propanediol are preferable as the water-soluble chain transfer agent from a viewpoint of even further increasing the moisture resistance of an electrode, and 3-mercapto-1,2-propanediol is particularly preferable as the water-soluble chain transfer agent. Note that one of these water-soluble chain transfer agents may be used individually, or two or more of these water-soluble chain transfer agents may be used as a mixture in a freely selected ratio.

The used amount of the water-soluble chain transfer agent is preferably 0.01 parts by mass or more, more preferably 0.05 parts by mass or more, even more preferably 0.10 parts by mass or more, and further preferably 0.5 parts by mass or more relative to 100 parts by mass of the acidic group-containing monomer and/or macromonomer used in the graft polymerization reaction, and is preferably 20 parts by mass or less, more preferably 15 parts by mass or less, and even more preferably 12 parts by mass or less relative to 100 parts by mass of the acidic group-containing monomer and/or macromonomer. When the used amount of the water-soluble chain transfer agent is not less than any of the lower limits set forth above, the moisture resistance of an electrode can be even further increased. Moreover, when the used amount of the water-soluble chain transfer agent is not less than any of the lower limits set forth above, the internal resistance of a secondary battery can be further reduced. On the other hand, when the used amount of the water-soluble chain transfer agent is not more than any of the upper limits set forth above, excessive reduction of the weight-average molecular weight of the water-soluble polymer formed as a by-product can be inhibited, which makes it possible to increase the viscosity stability of a slurry composition produced using the binder composition and improve the peel strength of an electrode.

### <Phenolic compound particles>

The presently disclosed binder composition further contains phenolic compound particles in addition to the particulate polymer described above. In other words, a phenolic compound is present in a particle state in the presently disclosed binder composition. As a result of the presently disclosed binder composition containing phenolic compound particles, the moisture resistance of an electrode formed using the binder composition can be increased.

The phenolic compound particles are preferably present as independent particles in the binder composition. The state in which "the phenolic compound particles are present as independent particles in the binder composition" is a state in which the phenolic compound particles are not incorporated into an inner part of another component such as the previously described particulate polymer in the binder composition. When the phenolic compound particles are present as independent particles in the binder composition, the moisture resistance of an electrode formed using the binder composition can be further increased.

It should be noted that so long as the presently disclosed binder composition contains a phenolic compound that is in particle state (i.e., contains phenolic compound particles), the presently disclosed binder composition may also separately contain a phenolic compound that is not in a particle state. As one specific example of a phenolic compound that is not in a particle state, a phenolic compound such as a hindered phenol antioxidant may be used in production of the previously described particulate polymer, thereby resulting in this phenolic compound being present in an incorporated state in an inner part (for example, a core particle portion) of the particulate polymer, for example.

The phenolic compound particles that are contained in the presently disclosed binder composition are particles that are formed of a phenolic compound.

The proportional content of the phenolic compound in the phenolic compound particles is normally 50 mass% or more, but is preferably 70 mass% or more, more preferably 90 mass% or more, and particularly preferably 100 mass% from a viewpoint of further improving the moisture resistance of an electrode. Note that the phenolic compound particles may contain components other than the phenolic compound within a range that yields the desired effects.

The particle shape of the phenolic compound particles is not specifically limited and may be a spherical shape, an acicular shape, or the like.

The phenolic compound forming the phenolic compound particles is a compound that has a phenol structure in a molecule thereof.

The phenolic compound forming the phenolic compound particles may be a phenolic compound such as 3,5-di-t-butyl-4-hydroxytoluene, dibutylhydroxytoluene, 2,2'-methylenebis(6-t-butyl-4-methylphenol), 4,4'-butylidenebis(3-t-butyl-3-methylphenol), 4,4'-thiobis(6-t-butyl-3-methylphenol), α-tocopherol, or 2,2,4-trimethyl-6-hydroxy-7-t-butylchromane; a polymer-type phenolic compound; or the like. Note that one of these phenolic compounds may be used individually, or two or more of these phenolic compounds may be used as a mixture in a freely selected ratio.

From a viewpoint of further improving the moisture resistance of an electrode, the phenolic compound forming the phenolic compound particles is preferably a polymer-type phenolic compound.

The polymer-type phenolic compound is a polymer that has a phenol structure in a molecule thereof.

The weight-average molecular weight of the polymer-type phenolic compound is preferably 200 or more, and more preferably 600 or more, and is preferably 1,000 or less. When the weight-average molecular weight of the polymer-type phenolic compound is not less than any of the lower limits set forth above, sufficiently high peel strength of an electrode formed using the binder composition can be ensured. On the other hand, when the weight-average molecular weight of the polymer-type phenolic compound is not more than the upper limit set forth above, sufficiently high molecular mobility can be ensured, and the effect of improving moisture resistance of an electrode formed using the binder composition can be maintained well.

Note that the "weight-average molecular weight" referred to in the present specification can be measured by gel permeation chromatography (GPC).

A polymer-type phenolic compound such as a reaction product of p-cresol, dicyclopentadiene, and isobutylene is preferably used as the polymer-type phenolic compound from a viewpoint of further improving the moisture resistance of an electrode.

The volume-average particle diameter of the phenolic compound particles is preferably 0.05 µm or more, more preferably 0.1 µm or more, even more preferably 0.4 µm or more, further preferably 0.6 µm or more, and even further preferably 0.8 µm or more, and is preferably 3 µm or less, more preferably 2 µm or less, and even more preferably 1.5 µm or less. When the volume-average particle diameter of the phenolic compound particles is not less than any of the lower limits set forth above, the viscosity stability of a slurry composition produced using the binder composition can be improved, and the peel strength of an electrode formed using the binder composition can be increased. On the other hand, when the volume-average particle diameter of the phenolic compound particles is not more than any of the upper limits set forth above, the moisture resistance of an electrode formed using the binder composition can be increased.

The content of the phenolic compound particles in the binder composition relative to 100 parts by mass of the particulate polymer is preferably 0.1 parts by mass or more, more preferably 0.2 parts by mass or more, and even more preferably 0.3 parts by mass or more, and is preferably 2.5 parts by mass or less, more preferably 1.8 parts by mass or less, even more preferably 1.5 parts by mass or less, and further preferably 1.0 parts by mass or less. When the content of the phenolic compound particles in the binder composition is within any of the specific ranges set forth above, the moisture resistance of an electrode formed using the binder composition can be further increased. Moreover, when the content of the phenolic compound particles in the binder composition is not more than any of the upper limits set forth above, the viscosity stability of a slurry composition produced using the binder composition can be improved, and the peel strength of an electrode formed using the binder composition can be increased.

### <Aqueous medium>

The aqueous medium that is contained in the presently disclosed binder composition is not specifically limited so long as it includes water and may be an aqueous solution or a mixed solution of water and a small amount of an organic solvent.

### <Other components>

The presently disclosed binder composition can contain components other than those described above (i.e., other components). For example, the binder composition may contain a known particulate binder (styrene butadiene random copolymer, acrylic polymer, etc.) other than the previously described particulate polymer.

The presently disclosed binder composition may also contain, as another component, a water-soluble polymer that is a by-product of a graft polymerization reaction in production of the previously described particulate polymer.

The presently disclosed binder composition may also contain known additives. Examples of such known additives include antioxidants, defoamers, and dispersants.

Note that one other component may be used individually, or two or more other components may be used in combination in a freely selected ratio.

### <<Alkali compound>>

It is preferable that an alkali compound is used in production of the presently disclosed binder composition. By using an alkali compound in production of the binder composition, it is possible to neutralize acidic groups (for example, carboxyl groups) in the acidic graft chain of the previously described particulate polymer and acidic groups in a water-soluble polymer produced as a by-product in the graft polymerization reaction and to adjust the pH of the binder composition to within a specific range described further below.

Although non-volatile alkali compounds such as sodium hydroxide (NaOH) and potassium hydroxide (KOH) may be used as the alkali compound, it is preferable to use a volatile alkali compound as the alkali compound. By using a volatile alkali compound in production of the binder composition, it is possible to further increase the moisture resistance of an electrode formed using the binder composition.

Therefore, it is preferable that the presently disclosed binder composition contains either or both of a volatile alkali compound and a cation originating from the volatile alkali compound as another component.

Note that in the present specification, the term "volatile alkali compound" refers to an alkali compound having a boiling point of lower than 105°C at 1 atmosphere, whereas the term "non-volatile alkali compound" refers to an alkali compound having a boiling point of 105°C or higher at 1 atmosphere.

The volatile alkali compound may be ammonia (boiling point: -33.34°C); a volatile organic amine such as methylamine (boiling point: -6°C), dimethylamine (boiling point: 7°C), trimethylamine (boiling point: 2.9°C), monoethylamine (boiling point: 16.6°C), diethylamine (boiling point: 55.5°C), triethylamine (boiling point: 89°C), or propylamine (boiling point: 49°C); or the like. Of these examples, ammonia is preferably used as the volatile alkali compound from a viewpoint of even further increasing the moisture resistance of an electrode formed using the binder composition.

Note that the amount of the volatile alkali compound used in production of the binder composition (i.e., the total content of the volatile alkali compound and cations originating therefrom in the binder composition) can be adjusted as appropriate depending on the desired pH value of the binder composition.

### <pH of binder composition>

The pH of the binder composition is preferably 6.0 or higher, more preferably 7.0 or higher, and even more preferably 8.0 or higher, and is preferably 10.0 or lower, and more preferably 9.0 or lower. When the pH of the binder composition is within any of the specific ranges set forth above, the viscosity stability of a slurry composition produced using the binder composition can be increased.

### (Production method of binder composition)

A feature of the presently disclosed method of producing a binder composition is that it includes a step (mixing step) of mixing phenolic compound particles and a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit. A binder composition that is produced by the presently disclosed method of producing a binder composition contains the specific particulate polymer described above and phenolic compound particles. Accordingly, the presently disclosed method of producing a binder composition enables production of a binder composition that can form an electrode having excellent moisture resistance.

Moreover, the presently disclosed method of producing a binder composition enables simple production of the presently disclosed binder composition set forth above.

Note that the presently disclosed method of producing a binder composition may further include steps other than the mixing step described above (i.e., other steps).

### <Mixing step>

In a phenolic compound particle addition step, the specific particulate polymer described above and phenolic compound particles are mixed. In this manner, a binder composition that contains the particulate polymer and the phenolic compound is obtained.

The particulate polymer and the phenolic compound particles that are used in the mixing step can be the particulate polymer and phenolic compound particles that were previously described in the "Binder composition for non-aqueous secondary battery electrode" section.

Note that no specific limitations are placed on the state of the particulate polymer and the phenolic compound particles that are used in the mixing step, and these materials may be in the form of a powder or may be dispersed in a solvent in the form of a dispersion liquid.

For example, the mixing step can be performed by mixing a dispersion liquid of the particulate polymer and a dispersion liquid of the phenolic compound particles. Note that an aqueous medium such as previously described in the "Binder composition for non-aqueous secondary battery electrode" section can be used as the solvent contained in the dispersion liquid of the particulate polymer and the dispersion liquid of the phenolic compound particles.

The used amount of the phenolic compound particles relative to 100 parts by mass of the used amount of the particulate polymer can, for example, be adjusted to within any of the same ranges as the preferable ranges for the content of the phenolic compound particles relative to 100 parts by mass of the particulate polymer in the binder composition that were previously described in the "Binder composition for non-aqueous secondary battery electrode" section.

### <Other steps>

The presently disclosed method of producing a binder composition preferably further includes a neutralization step as another step, for example.

The neutralization step may be a step in which an alkali compound is added to a dispersion liquid of the particulate polymer prior to the mixing step or may be a step in which an alkali compound is added to a binder composition obtained after the mixing step, for example. By adding an alkali compound to the dispersion liquid of the particulate polymer or the binder composition, it is possible to neutralize acidic groups (for example, carboxyl groups) in the acidic graft chain of the particulate polymer and acidic groups in a water-soluble polymer produced as a by-product in the graft polymerization reaction during production of the particulate polymer and to adjust the pH of the produced binder composition to within any of the preferable ranges previously described in the "Binder composition for non-aqueous secondary battery electrode" section.

Note that a volatile alkali compound or the like such as previously described in the "Binder composition for non-aqueous secondary battery electrode" section can be adopted as the alkali compound that is used in the neutralization step, for example.

The amount of the alkali compound that is used in the neutralization step can be adjusted as appropriate depending on the desired pH value of the binder composition.

### (Slurry composition for non-aqueous secondary battery electrode)

The presently disclosed slurry composition is a composition that is for use in formation of an electrode mixed material layer of an electrode. The presently disclosed slurry composition contains the presently disclosed binder composition set forth above and further contains an electrode active material. In other words, the presently disclosed slurry composition contains the previously described particulate polymer, phenolic compound particles, an electrode active material, and an aqueous medium, and optionally further contains other components. The presently disclosed slurry composition can form an electrode having excellent moisture resistance as a result of containing the presently disclosed binder composition set forth above.

### <Binder composition>

The binder composition is the presently disclosed binder composition set forth above that contains a particulate polymer formed of a specific graft polymer and phenolic compound particles.

No specific limitations are placed on the amount of the binder composition in the slurry composition. For example, the amount of the binder composition can be set as an amount such as to be not less than 0.5 parts by mass and not more than 15 parts by mass in terms of solid content per 100 parts by mass of the electrode active material.

### <Electrode active material>

Any known electrode active material that is used in secondary batteries can be used as the electrode active material without any specific limitations. Specifically, examples of electrode active materials that can be used in an electrode mixed material layer of a lithium ion secondary battery, which is one example of a secondary battery, include the following electrode active materials, but are not specifically limited thereto.

### [Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.

Specific examples of positive electrode active materials that may be used include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

Note that one of the positive electrode active materials described above may be used individually, or two or more of the positive electrode active materials described above may be used in combination.

### [Negative electrode active material]

A negative electrode active material that is compounded in a negative electrode mixed material layer of a negative electrode in a lithium ion secondary battery is normally a material that can occlude and release lithium. The material that can occlude and release lithium may be a carbon-based negative electrode active material, a non-carbon-based negative electrode active material, an active material that is a combination thereof, or the like, for example.

### -Carbon-based negative electrode active material-

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

A carbonaceous material is a material with a low degree of graphitization (i.e., low crystallinity) that can be obtained by carbonizing a carbon precursor by heat treatment at 2000°C or lower. The lower limit of the heat treatment temperature in the carbonization is not specifically limited and may, for example, be 500°C or higher. Examples of the carbonaceous material include graphitizing carbon having a carbon structure that can easily be changed according to the heat treatment temperature and non-graphitizing carbon typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

The graphitic material is a material having high crystallinity of a similar level to graphite. The graphitic material can be obtained by heat-treating graphitizing carbon at 2000°C or higher. The upper limit of the heat treatment temperature is not specifically limited and may, for example, be 5000°C or lower. Examples of the graphitic material include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

Herein, natural graphite that is at least partially surface coated with amorphous carbon (amorphous-coated natural graphite) may also be used as a carbon-based negative electrode active material.

### -Non-carbon-based negative electrode active material-

The non-carbon-based negative electrode active material is an active material that is not a carbon-based negative electrode active material composed only of a carbonaceous material or a graphitic material. Examples of the non-carbon-based negative electrode active material include a metal-based negative electrode active material.

The metal-based negative electrode active material is an active material that contains metal, the structure of which usually contains an element that allows insertion of lithium, and that has a theoretical electric capacity per unit mass of 500 mAh/g or more when lithium is inserted. Examples of metal-based negative electrode active materials include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti) and alloys thereof; and oxides, sulfides, nitrides, silicides, carbides, and phosphides any of the preceding examples. For example, an active material that includes silicon (silicon-based negative electrode active material) can be used as a metal-based negative electrode active material. The use of a silicon-based negative electrode active material makes it possible to increase the capacity of a lithium ion secondary battery.

Examples of the silicon-based negative electrode active material include silicon (Si), a silicon-containing alloy, SiO, SiOₓ, and a composite material of conductive carbon and a Si-containing material obtained by coating or combining the Si-containing material with the conductive carbon. One of these silicon-based negative electrode active materials may be used individually, or two or more of these silicon-based negative electrode active materials may be used in combination.

The silicon-containing alloy may, for example, be an alloy composition that contains silicon and at least one element selected from the group consisting of titanium, iron, cobalt, nickel, and copper. Alternatively, the silicon-containing alloy may, for example, be an alloy composition that contains silicon, aluminum, and a transition metal such as iron, and further contains rare-earth elements such as tin and yttrium.

### <Other components>

No specific limitations are placed on other components that can be compounded in the slurry composition and examples thereof include conductive materials and the same other components as can be compounded in the presently disclosed binder composition. Note that one other component may be used individually, or two or more other components may be used in combination in a freely selected ratio.

### <Production of slurry composition>

No specific limitations are placed on the method by which the slurry composition is produced.

For example, the slurry composition can be produced by mixing the binder composition, the electrode active material, and other components that are used as necessary in the presence of an aqueous medium.

Note that the aqueous medium that is used in production of the slurry composition includes the aqueous medium that was contained in the binder composition. Moreover, the mixing method is not specifically limited and can be mixing using a typically used stirrer or disperser.

### (Electrode for non-aqueous secondary battery)

The presently disclosed electrode for a non-aqueous secondary battery includes an electrode mixed material layer formed using the slurry composition for a non-aqueous secondary battery electrode set forth above. Consequently, the electrode mixed material layer is formed of a dried product of the slurry composition set forth above, normally contains an electrode active material, a component derived from a particulate polymer, and phenolic compound particles, and optionally contains other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Also note that although the particulate polymer is in a particulate form in the slurry composition, the particulate polymer may be in a particulate form or in any other form in the electrode mixed material layer that is formed using the slurry composition.

The presently disclosed electrode for a non-aqueous secondary battery has excellent moisture resistance as a result of the electrode mixed material layer being formed using the slurry composition for a non-aqueous secondary battery electrode set forth above.

### <Production of electrode for non-aqueous secondary battery>

The electrode mixed material layer of the presently disclosed electrode for a non-aqueous secondary battery can be formed by any of the following methods, for example.
(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step (application step) of applying the slurry composition onto a current collector and a step (drying step) of drying the slurry composition that has been applied onto the current collector to form an electrode mixed material layer on the current collector.

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to a pressing process, such as mold pressing or roll pressing. The pressing process improves close adherence of the electrode mixed material layer and the current collector and enables further densification of the obtained electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed non-aqueous secondary battery includes a positive electrode, a negative electrode, an electrolyte solution, and a separator, and has the electrode for a non-aqueous secondary battery set forth above as at least one of the positive electrode and the negative electrode. The presently disclosed non-aqueous secondary battery can display excellent battery characteristics as a result of being produced by using the electrode for a non-aqueous secondary battery set forth above as at least one of the positive electrode and the negative electrode.

Although the following describes, as one example, a case in which the secondary battery is a lithium ion secondary battery, the presently disclosed secondary battery is not limited to the following example.

### <Electrodes>

Examples of electrodes other than the presently disclosed electrode for a non-aqueous secondary battery set forth above that can be used in the presently disclosed non-aqueous secondary battery include known electrodes that are used in production of secondary batteries without any specific limitations. Specifically, an electrode obtained by forming an electrode mixed material layer on a current collector by a known production method may be used as an electrode other than the presently disclosed electrode for a non-aqueous secondary battery set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Separator>

The separator is not specifically limited and can be a separator such as described in JP2012-204303A, for example. Of these separators, a microporous membrane formed of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. In the presently disclosed non-aqueous secondary battery, the electrode for a non-aqueous secondary battery set forth above is used as at least one of the positive electrode and the negative electrode, and is preferably used as the negative electrode. The presently disclosed non-aqueous secondary battery may be provided with an overcurrent preventing device such as a fuse or a PTC device; an expanded metal; or a lead plate, as necessary, in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the volume-average particle diameter of phenolic compound particles, the viscosity stability of a slurry composition, and the peel strength and moisture resistance of an electrode.

### <Volume-average particle diameter of phenolic compound particles>

Phenolic compound particles were separated and collected from an obtained binder composition through microfiltration using a microfiltration membrane made of polyethylene (produced by Asahi Kasei Corporation; product name: Microza MF; pore diameter: 0.5 µm). Note that in the separation operation, 200 g of the binder composition was used, the flow rate was controlled such as to be not less than 80 mL/min and not more than 150 mL/min, the processing time was set as 6 hours, and ad hoc addition of water was performed in an equal amount to discharged water. The obtained phenolic compound particles were measured using a laser diffraction/scattering particle size distribution analyzer (Microtrac MT-3200II produced by Nikkiso Co., Ltd.). In the measured particle diameter distribution (by volume), the particle diameter (D50) at which cumulative volume calculated from a small diameter end of the distribution reached 50% was taken to be the volume-average particle diameter of the phenolic compound.

### <Viscosity stability of slurry composition>

The viscosity η0 of an obtained slurry composition was measured using a B-type viscometer (produced by Toki Sangyo Co., Ltd.; product name: TVB-10; rotation speed: 60 rpm). Next, the slurry composition that had undergone viscosity measurement was stirred for 24 hours using a planetary mixer (rotation speed: 60 rpm), and the viscosity η1 of the slurry composition after stirring was then measured using the same B-type viscometer (rotation speed: 60 rpm) as described above. A viscosity change rate Δη of the slurry composition between before and after stirring was calculated (Δη = {(η0-η1)/η0} × 100(%)), and the viscosity stability of the slurry composition was evaluated by the following standard. Note that the temperature during viscosity measurement was 25°C. An absolute value |Δη| for the viscosity change rate that is closer to 0 indicates that the slurry composition has better viscosity stability.
A: Viscosity change rate absolute value |Δη| of not less than 0% and less than 10%
B: Viscosity change rate absolute value |Δη| of not less than 10% and less than 20%
C: Viscosity change rate absolute value |Δη| of not less than 20% and less than 30%
D: Viscosity change rate absolute value |Δη| of 30% or more

### <Peel strength of electrode>

A produced negative electrode was cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z 1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner. An average value of the measurements was determined and was taken to be the peel strength (A) of the electrode. An evaluation was made by the following standard. A larger peel strength indicates that the negative electrode mixed material layer has larger binding strength to the current collector, and thus indicates larger close adherence strength.
A: Peel strength of 10 N/m or more.
B: Peel strength of less than 10 N/m.

### <Moisture resistance of electrode>

A produced negative electrode was stored for 144 hours in a constant temperature and constant humidity tank in which conditions of a temperature of 25°C and a humidity of 85% were set and was subsequently stored for 24 hours in a dry room having a dew point of -60°C. The negative electrode was then cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner. An average value of the measurements was determined and was taken to be the peel strength (B) of the electrode after storage in a high-humidity environment. A peel strength maintenance rate was calculated from the peel strength (A) of the electrode straight after production, which was obtained in the measurement method of electrode peel strength described above, and the peel strength (B) of the electrode after storage in a high-humidity environment through a calculation formula: peel strength maintenance rate = {(B)/(A)} × 100(%), and was evaluated by the following standard. A higher peel strength maintenance rate indicates that the electrode has better moisture resistance.
A: Peel strength maintenance rate of 95% or more
B: Peel strength maintenance rate of not less than 85% and less than 95%
C: Peel strength maintenance rate of not less than 75% and less than 85%
D: Peel strength maintenance rate of less than 75%

### (Example 1)

### <Production of binder composition for non-aqueous secondary battery negative electrode>

### <<Production of cyclohexane solution of block copolymer>>

A pressure-resistant reactor was charged with 233.3 kg of cyclohexane, 31.03 mmol of N,N,N',N'-tetramethylethylenediamine (TMEDA), and 30.0 kg of styrene as an aromatic vinyl monomer. These materials were stirred at 40°C while 1034.5 mmol of n-butyllithium as a polymerization initiator was added thereto, and then 1 hour of polymerization was performed under heating at 50°C. The polymerization conversion rate of styrene was 100%. Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%.

Next, 460.3 mmol of dichlorodimethylsilane as a coupling agent was added into the pressure-resistant reactor and a coupling reaction was carried out for 2 hours to form a styrene-butadiene coupled block copolymer. Thereafter, 2069.0 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tert-butylphenol as a hindered phenol antioxidant and 0.09 parts of 3,9-bis(octadecyloxy)-2,4,8,10-tetraoxa-3,9-diphosphaspiro[5.5]undecane as a phosphite antioxidant were added to 100 parts of the reaction liquid (containing 30.0 parts of polymer component) and were mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a block copolymer.

The collected dried product was dissolved in cyclohexane to produce a block copolymer solution having a block copolymer concentration of 10.0%.

### <<Phase-inversion emulsification>>

Sodium alkylbenzene sulfonate was dissolved in deionized water to produce a 0.3% aqueous solution.

After loading 1,000 g of the obtained block copolymer solution and 1,000 g of the obtained aqueous solution into a tank, these solutions were stirred to perform preliminary mixing and obtain a preliminary mixture. Next, the preliminary mixture was transferred from the tank to a high-pressure emulsifying/dispersing device "LAB1000" (produced by SPX FLOW, Inc.) using a metering pump and was circulated (number of passes: 5) so as to obtain an emulsion in which the preliminary mixture had undergone phase-inversion emulsification.

Next, cyclohexane in the obtained emulsion was evaporated under reduced pressure in a rotary evaporator.

Finally, the emulsion from which cyclohexane had been removed was filtered through a 100-mesh screen to obtain a water dispersion (block copolymer latex) containing a block copolymer that had been formed into particles (core particles).

### <<Graft polymerization and cross-linking>>

Distilled water was added to dilute the obtained block copolymer latex such that the amount of water was 800 parts relative to 100 parts (in terms of solid content) of the block copolymer. The diluted block copolymer latex was loaded into a stirrer-equipped polymerization reactor that had undergone nitrogen purging and was heated to a temperature of 30°C under stirring.

In addition, a separate vessel was used to produce a diluted methacrylic acid solution by mixing 6 parts of methacrylic acid as an acidic group-containing monomer and 90 parts of distilled water. The diluted methacrylic acid solution was added over 30 minutes into the polymerization reactor that had been heated to 30°C so as to add 6 parts of methacrylic acid relative to 100 parts of the block copolymer. Thereafter, 1.0 parts of 3-mercapto-1,2-propanediol as a water-soluble chain transfer agent was added relative to 100 parts (in terms of solid content) of the block polymer.

A separate vessel was used to produce a solution containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) as an oxidant was subsequently added, and a reaction was carried out at 30°C for 1 hour and then at 70°C for 2 hours. In this manner, methacrylic acid was graft polymerized with the block copolymer that had been formed into particles and cross-linking of the block copolymer was also performed to yield a water dispersion of a particulate polymer. The polymerization conversion rate was 99%.

### «Neutralization by volatile alkali compound»

The obtained water dispersion of the particulate polymer was neutralized and adjusted to pH 8.0 through addition of an aqueous solution (concentration: 10%) of ammonia.

### <<Addition of phenolic compound particles>>

A dispersion (water dispersion) of polymer-type phenolic compound particles (weight-average molecular weight: 1,000; volume-average particle diameter: 0.8 µm) that were a reaction product of p-cresol, dicyclopentadiene, and isobutylene was added as a dispersion liquid of phenolic compound particles to the water dispersion of the particulate polymer that had been neutralized so as to obtain a binder composition. Note that the additive amount (in terms of solid content) of the phenolic compound particles was set as 1.0 parts relative to 100 parts (in terms of solid content) of the particulate polymer.

The volume-average particle diameter of the phenolic compound particles in the obtained binder composition was measured. The result is shown in Table 1.

Note that the particulate polymer and the phenolic compound particles were present independently of each other in the obtained binder composition. Also note that the obtained binder composition had a pH of 8.0.

### <Production of slurry composition for non-aqueous secondary battery negative electrode>

A mixture was obtained by loading 97 parts of graphite (natural graphite) (capacity: 360 mAh/g) as a negative electrode active material and 1 part (in terms of solid content) of carboxymethyl cellulose (CMC) as a thickener into a planetary mixer. The obtained mixture was adjusted to a solid content concentration of 60% with deionized water and was then kneaded at a rotation speed of 45 rpm for 60 minutes. Thereafter, 1.5 parts in terms of solid content of the binder composition produced as described above was added and was kneaded therewith at a rotation speed of 40 rpm for 40 minutes. Deionized water was added to adjust the viscosity (measured by B-type viscometer; temperature: 25°C; rotor speed: 60 rpm) to 3,000 ± 500 mPa·s and thereby obtain a slurry composition for a negative electrode.

The viscosity stability of the obtained slurry composition for a negative electrode was evaluated. The result is shown in Table 1.

### <Formation of negative electrode>

The obtained slurry composition for a negative electrode was applied onto electrolytic copper foil of 15 µm in thickness serving as a current collector by a comma coater such as to have a coating weight of 11 ± 0.5 mg/cm². The copper foil with the slurry composition for a negative electrode applied thereon was then conveyed inside an oven having a temperature of 120°C for 2 minutes and an oven having a temperature of 130°C for 2 minutes at a speed of 400 mm/min so as to dry the slurry composition on the copper foil and thereby obtain a negative electrode web including a negative electrode mixed material layer formed on the current collector.

The negative electrode mixed material layer-side of the produced negative electrode web was subsequently roll pressed in an environment having a temperature of 25 ± 3°C to obtain a negative electrode having a negative electrode mixed material layer density of 1.60 g/cm³. The peel strength and moisture resistance of the negative electrode obtained in this manner were evaluated. The results are shown in Table 1.

### (Example 2)

A binder composition for a negative electrode, a slurry composition for a negative electrode, and a negative electrode were produced in the same way as in Example 1 with the exception that the dispersion liquid of phenolic compound particles used in production of the binder composition for a non-aqueous secondary battery negative electrode in Example 1 was changed from the dispersion of polymer-type phenolic compound particles (volume-average particle diameter: 0.8 µm) described above to a dispersion of particles of 3,5-di-t-butyl-4-hydroxytoluene (volume-average particle diameter: 0.8 µm). Evaluations were conducted in the same manner as in Example 1. The results are shown in Table 1.

### (Example 3)

A binder composition for a negative electrode, a slurry composition for a negative electrode, and a negative electrode were produced in the same way as in Example 1 with the exception that the volume-average particle diameter of phenolic compound particles contained in the dispersion of polymer-type phenolic compound particles used in production of the binder composition for a non-aqueous secondary battery negative electrode in Example 1 was changed from 0.8 µm to 0.4 µm. Evaluations were conducted in the same manner as in Example 1. The results are shown in Table 1.

### (Example 4)

A binder composition for a negative electrode, a slurry composition for a negative electrode, and a negative electrode were produced in the same way as in Example 1 with the exception that the volume-average particle diameter of phenolic compound particles contained in the dispersion of polymer-type phenolic compound particles used in production of the binder composition for a non-aqueous secondary battery negative electrode in Example 1 was changed from 0.8 µm to 1.6 µm. Evaluations were conducted in the same manner as in Example 1. The results are shown in Table 1.

### (Example 5)

A binder composition for a negative electrode, a slurry composition for a negative electrode, and a negative electrode were produced in the same way as in Example 1 with the exception that the additive amount (in terms of solid content) of phenolic compound particles in production of the binder composition for a non-aqueous secondary battery negative electrode in Example 1 was changed from 1.0 parts to 0.2 parts relative to 100 parts (in terms of solid content) of the particulate polymer. Evaluations were conducted in the same manner as in Example 1. The results are shown in Table 1.

### (Example 6)

A binder composition for a negative electrode, a slurry composition for a negative electrode, and a negative electrode were produced in the same way as in Example 1 with the exception that the additive amount (in terms of solid content) of phenolic compound particles in production of the binder composition for a non-aqueous secondary battery negative electrode in Example 1 was changed from 1.0 parts to 1.8 parts relative to 100 parts (in terms of solid content) of the particulate polymer. Evaluations were conducted in the same manner as in Example 1. The results are shown in Table 1.

### (Example 7)

A binder composition for a negative electrode, a slurry composition for a negative electrode, and a negative electrode were produced in the same way as in Example 1 with the exception that an aqueous solution (concentration: 10%) of sodium hydroxide (NaOH), which is a non-volatile alkali compound, was used instead of an aqueous solution (concentration: 10%) of ammonia, which is a volatile alkali compound, in neutralization of the obtained water dispersion of the particulate polymer in production of the binder composition for a non-aqueous secondary battery negative electrode in Example 1. Evaluations were conducted in the same manner as in Example 1. The results are shown in Table 1.

### (Example 8)

A binder composition for a negative electrode, a slurry composition for a negative electrode, and a negative electrode were produced in the same way as in Example 1 with the exception that the amount of methacrylic acid used as an acidic group-containing monomer added during graft polymerization and cross-linking in production of the binder composition for a non-aqueous secondary battery negative electrode in Example 1 was changed from 6 parts to 3.5 parts relative to 100 parts of the block copolymer. Evaluations were conducted in the same manner as in Example 1. The results are shown in Table 1.

### (Example 9)

A binder composition for a negative electrode, a slurry composition for a negative electrode, and a negative electrode were produced in the same way as in Example 1 with the exception that the amount of methacrylic acid used as an acidic group-containing monomer added during graft polymerization and cross-linking in production of the binder composition for a non-aqueous secondary battery negative electrode in Example 1 was changed from 6 parts to 10 parts relative to 100 parts of the block copolymer. Evaluations were conducted in the same manner as in Example 1. The results are shown in Table 1.

### (Example 10)

A binder composition for a negative electrode, a slurry composition for a negative electrode, and a negative electrode were produced in the same way as in Example 1 with the exception that in production of the cyclohexane solution of the block copolymer in production of the binder composition for a non-aqueous secondary battery negative electrode in Example 1, the additive amount of styrene as an aromatic vinyl monomer was changed from 30.0 kg to 45.0 kg and the additive amount of 1,3-butadiene as an aliphatic conjugated diene monomer was changed from 70.0 kg to 55.0 kg. Evaluations were conducted in the same manner as in Example 1. The results are shown in Table 1.

### (Comparative Example 1)

A binder composition for a negative electrode, a slurry composition for a negative electrode, and a negative electrode were produced in the same way as in Example 1 with the exception that the dispersion of polymer-type phenolic compound particles described above was not added to the water dispersion of the particulate polymer that had been neutralized in production of the binder composition for a non-aqueous secondary battery negative electrode in Example 1. Evaluations were conducted in the same manner as in Example 1. The results are shown in Table 1.

### (Comparative Example 2)

A binder composition for a negative electrode, a slurry composition for a negative electrode, and a negative electrode were produced in the same way as in Example 7 with the exception that the dispersion of polymer-type phenolic compound particles described above was not added to the water dispersion of the particulate polymer that had been neutralized in production of the binder composition for a non-aqueous secondary battery negative electrode in Example 7. Evaluations were conducted in the same manner as in Example 1. The results are shown in Table 1.

### (Comparative Example 3)

A binder composition for a negative electrode, a slurry composition for a negative electrode, and a negative electrode were produced in the same way as in Example 1 with the exception that the timing of addition of phenolic compound particles in production of the binder composition for a non-aqueous secondary battery negative electrode in Example 1 was changed to during phase-inversion emulsification instead of after neutralization by a volatile alkali compound (ammonia). Specifically, 1,000 g of the block copolymer solution, the 0.3% aqueous solution of sodium alkylbenzene sulfonate, and the dispersion of polymer-type phenolic compound particles (weight-average molecular weight: 1,000; volume-average particle diameter: 0.8 µm) that were a reaction product of p-cresol, dicyclopentadiene, and isobutylene were loaded into the tank, were stirred to perform preliminary mixing and obtain a preliminary mixture, and this preliminary mixture was used to perform phase-inversion emulsification to obtain an emulsion. Evaluations were conducted in the same manner as in Example 1. The results are shown in Table 1.

Note that although the binder composition obtained in Comparative Example 3 contained a polymer-type phenolic compound, this phenolic compound was not present in a particle state in the binder composition. Consequently, the volume-average particle diameter of phenolic compound particles in the binder composition could not be measured. Moreover, the phenolic compound was present in an incorporated state in an inner part of the particulate polymer (more specifically, a core particle portion thereof).

Note that in Table 1:
"ST" indicates styrene;
"BD" indicates 1,3-butadiene;
"MAA" indicates methacrylic acid; and
"DBHT" indicates 3,5-di-t-butyl-4-hydroxytoluene.

**Table 1**

| | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|---|
| Particulate polymer | Core particles | Structure | Block | Block | Block | Block | Block | Block | Bbck | Block | Block | Bbck | Block | Block | Block |
| | | Aromatic vinyl monomer unit [mass%] | ST | ST | ST | ST | ST | ST | ST | ST | ST | ST | ST | ST | ST |
| | | | 30 | 30 | 30 | 30 | 30 | 30 | 30 | 30 | 30 | 45 | 30 | 30 | 30 |
| | | Aliphatic conjugated diene monomer unit [mass%] | BD | BD | BD | BD | BD | BD | BD | BD | BD | BD | BD | BD | BD |
| | | | 70 | 70 | 70 | 70 | 70 | 70 | 70 | 70 | 70 | 55 | 70 | 70 | 70 |
| | Acidic graft chain | Acidic group-containing monomer | MAA | MAA | MAA | MAA | MAA | MAA | MAA | MAA | MAA | MAA | MAA | MAA | MAA |
| | Additive amount of acidic group-containing monomer [parts by mass/100 parts by mass ofbbck copolymer] | | 6 | 6 | 6 | 6 | 6 | 6 | 6 | 3.5 | 10 | 6 | 6 | 6 | 6 |
| Phenolic compound | Type | | Polymer-type | DBHT | Polymer-type | Polymer-type | Polymer-type | Polymer-type | Polymer-type | Polymer-type | Polymer-type | Polymer-type | - | - | Polymer-type |
| | Volume-average particle diameter [µm] | | 0.8 | 0.8 | 0.4 | 1.6 | 0.8 | 0.8 | 0.8 | 0.8 | 0.8 | 0.8 | | | - |
| | Content [parts by mass] | | 1 | 1 | 1 | 1 | 0.2 | 1.8 | 1 | 1 | 1 | 1 | | | 1 |
| | State | | Independent particles | Independent particles | Independent particles | Independent particles | Independent particles | Independent particles | Independent particles | Independent particles | Independent particles | Independent particles | | | Inside particulate polymer |
| Alkali compound for neutralization | | | NH₃ | NH₃ | NH₃ | NH₃ | NH₃ | NH₃ | NaOH | NH₃ | NH₃ | NH₃ | NH₃ | NaOH | NH₃ |
| Evaluation | Viscosity stability | | A | A | B | A | A | B | A | B | A | A | A | A | A |
| | Peel strength | | A | A | B | A | A | B | A | B | A | B | A | A | A |
| | Moisture resistance | | A | B | A | B | B | B | B | A | B | A | C | D | C |

It can be seen from Table 1 that a negative electrode having excellent moisture resistance is obtained using the binder compositions for a negative electrode of Examples 1 to 10, which each contain a particulate polymer formed of a specific graft polymer and phenolic compound particles.

In contrast, it can be seen that the moisture resistance of a formed negative electrode is poor when using the binder compositions for a negative electrode of Comparative Examples 1 to 3, which do not contain phenolic compound particles.

### INDUSTRIAL APPLICABILITY

According to the present disclosure, it is possible to provide a binder composition for a non-aqueous secondary battery electrode that can form an electrode for a non-aqueous secondary battery having excellent moisture resistance.

Moreover, according to the present disclosure, it is possible to provide a slurry composition for a non-aqueous secondary battery electrode that can form an electrode for a non-aqueous secondary battery having excellent moisture resistance.

Furthermore, according to the present disclosure, it is possible to provide an electrode for a non-aqueous secondary battery that has excellent moisture resistance and a non-aqueous secondary battery that includes this electrode for a non-aqueous secondary battery.

## Claims

1. A binder composition for a non-aqueous secondary battery electrode comprising:
a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit; and
phenolic compound particles.

2. The binder composition for a non-aqueous secondary battery electrode according to claim 1, wherein the particulate polymer and the phenolic compound particles are present independently of each other.

3. The binder composition for a non-aqueous secondary battery electrode according to claim 1 or 2, wherein the phenolic compound particles have a volume-average particle diameter of not less than 0.05 µm and not more than 3 µm.

4. The binder composition for a non-aqueous secondary battery electrode according to any one of claims 1 to 3, wherein content of the phenolic compound particles is not less than 0.1 parts by mass and not more than 2.5 parts by mass relative to 100 parts by mass of the particulate polymer.

5. The binder composition for a non-aqueous secondary battery electrode according to any one of claims 1 to 4, wherein the acidic group-containing monomer includes a carboxyl group-containing monomer.

6. The binder composition for a non-aqueous secondary battery electrode according to any one of claims 1 to 5, further comprising either or both of a volatile alkali compound and a cation originating from the volatile alkali compound.

7. The binder composition for a non-aqueous secondary battery electrode according to any one of claims 1 to 6, wherein the phenolic compound particles contain a polymer-type phenolic compound.

8. A method of producing a binder composition for a non-aqueous secondary battery electrode comprising a step of mixing phenolic compound particles and a particulate polymer formed of a graft polymer that includes an acidic graft chain and that is obtained through a graft polymerization reaction of an acidic group-containing monomer and/or macromonomer with core particles containing a block copolymer that includes an aromatic vinyl block region formed of an aromatic vinyl monomer unit and an aliphatic conjugated diene block region formed of an aliphatic conjugated diene monomer unit.

9. A slurry composition for a non-aqueous secondary battery electrode comprising: an electrode active material; and the binder composition for a non-aqueous secondary battery electrode according to any one of claims 1 to 7.

10. An electrode for a non-aqueous secondary battery comprising an electrode mixed material layer formed using the slurry composition for a non-aqueous secondary battery electrode according to claim 9.

11. A non-aqueous secondary battery comprising the electrode for a non-aqueous secondary battery according to claim 10.
